# EUROPÄISCHE PATENTSCHRIFT

(11) **EP 0 885 098 B1**
(45) Veröffentlichungstag und Bekanntmachung des Hinweises auf die Patenterteilung: **12.06.2002**
(21) Anmeldenummer: 97906136.3
(22) Anmeldetag: 28.02.1997
(51) Int. Cl.: B27K 3/14, B27K 3/52

(54) **HOLZSCHUTZMITTEL FÜR DEN NACHSCHUTZ**
TIMBER PRESERVING AGENT FOR MAINTENANCE PURPOSES
AGENT DE PROTECTION DU BOIS POUR TRAVAUX D'ENTRETIEN

(30) Priorität: 05.03.1996 DE 19608435
(43) Veröffentlichungstag der Anmeldung: 23.12.1998
(73) Patentinhaber: Dr. Wolman GmbH, D-76547 Sinzheim (DE)
(72) Erfinder: GOETTSCHE, Reimer, D-76532 Baden-Baden (DE); HETTLER, Wendelin, D-76547 Sinzheim (DE); BREUER, Michael, D-72108 Rottenburg (DE); SEELMANN-EGGEBERT, Hans-Peter, D-67117 Limburgerhof (DE)
(74) Vertreter: Werner, Frank
(86) Internationale Anmeldenummer: EP9700966
(87) Internationale Veröffentlichungsnummer: WO9732700

(56) Entgegenhaltungen:
- EP-A- 0 234 461
- EP-A- 0 270 848
- DE-A- 3 743 821
- US-A- 5 342 438

## Beschreibung

Die vorliegende Erfindung betrifft die Verwendung eines Holzschutzmittels für den Nachschutz von Holz, enthaltend eine Kupferverbindung, ein Polyamin und ein anorganisches Fungizid sowie eine Bandage für den Nachschutz von Holz, die dieses Holzschutzmittel enthält.

Zur Nachpflege im Leitungsnetz stehender Leitungsmasten der Post und Elektrizitätsversorgungsunternehmen oder ähnlicher Rundhölzer, werden insbesondere im Bereich der Erdluftzone Bandagen mit wasserlöslichen Holzschutzmitteln angelegt. Es ist bekannt, hierfür wasserlösliche Salze auf Basis von anorganischen Fluorverbindungen wie z.B. Alkalifluoride, teilweise in Verbindung mit Alkalibichromat oder Borverbindungen wie Borsäure oder Borax einzusetzen. Diese Salze sind jedoch ausschließlich gegenüber holzzerstörenden Basidiomyceten wirksam, es fehlt die Moderfäulewirksamkeit für den Einbau mit Erdkontakt. Vorgeschlagen werden als moderfäulewirksame Stoffe einerseits Dinitrophenol (Barry A. Richardson: Wood preservation - The Construction Press Ltd., Lancaster S. 181) oder Kombinationen o.g. Verbindungen mit wasserlöslichen Kupfersalzen wie z.B. Kupfersulfat oder Kupferacetat. Es sind Mischungen von Kupfersulfat auch in Kombination mit Alkalibichromat, mit Borsäure und Kupferacetat mit Alkalifluoroboraten Stand der Technik. Dinitrophenol scheidet wegen seiner Toxizität inzwischen aus.

Die wasserlöslichen o.g. Kupferverbindungen besitzen allein, aber auch in o.g. Kombinationen, kein gutes Diffusionsvermögen, um z.B. das Splintholz von Kiefernmasten, auch bei langen Standzeiten, ausreichend zu durchdringen und den Kern zu erreichen.

Holzschutzmittel auf Basis von Kupfer und Aminen als Komplexbildner wurden für die großtechnische Imprägnierung, insbesondere Kesseldrucktränkung, vorgeschlagen.

Die EP-B- 211 181 betrifft ein Holzschutzmittel auf Basis eines Kupfersalzes und Monoethanolamin zur Kesseldruckimprägnierung von Holz.

Die EP-B 270 848 beschreibt ein Holzschutzmittel auf der Basis einer Kupferverbindung, einer Carbonsäure und eines aliphatischen Polyamins für die Kesseldruckimprägnierung.

Die EP-A 423 674 beschreibt ein Holzschutzmittel auf der Basis eines Metallsalzes einer N-Organyldiazeniumdioxy-Verbindung und einem komplexbildenden polymeren Amin für das Kesseldruck-5 verfahren.

Die EP-A-0 234 461 beschreibt ein Holzschutzmittel auf der Basis von Kupfer-di-(N-Cyclohexyldiazoniumdioxid), einem Polyamin und einer komplexbildenden Carbonsäure für das Kesseldruckverfahren.

Die DE-A-3743821 beschreibt ein Holzschutzmittel auf der Basis von Kupfer-di-(N-Cyclohexyldiazoniumdioxid), einem Polyamin, einer komplexbildenden Carbonsäure, einer Tributylzinnverbindung und einem Emulgator.

Allen oben beschriebenen Holzschutzmitteln ist gemeinsam, daß sie ein hohes Fixierungsvermögen für das Kupfer im Holz aufweisen. Hierdurch wird das Diffusionsvermögen des Kupfers eingeschränkt, weshalb diese Systeme für den Nachschutz von Holz ungeeignet sind.

"Bekannte, aktuell verwendete Systeme für den Nachschutz von Holz enthalten z.B. Kombinationen von Kupfernaphthenat, Bor- und Fluorverbindungen. Ein Beispiel für diesen hauptsächlich in den USA verwendeten Produkttyp ist CuRAP 20 (Hersteller: ISK Biotech), eine Paste, die 18,16 % aminbasiertes Kupfernaphthenat und 40 % Natriumtetraborat Decahydrat enthält. Untersuchungen an Masten (Holzart Douglasie bzw. Kiefer), die mit diesem Produkt behandelt worden waren, zeigten nach 1- bis 3-jähriger Standzeit, daß Kupfer zum überwiegenden Teil praktisch nur oberflächennah (0-10 mm) im Holz verteilt ist (bei untersuchten Eindringtiefen bis 25 mm) und diese Produkte somit nur ein sehr eingeschränktes Diffusionsvermögen für Kupfer aufweisen (Conserving energy by environmentally acceptable practices in maintaining and procuring transmission poles. 15th annual report; September 1995, J. J. Morrell, Oregon State University, Corvallis, Oregon.)."

Die US-A-5 342 438 beschreibt Pasten für Bandagen, wobei es sich gemäß Anspruch 1 um wasserunlösliche Holzschutzmittel handelt. Das Diffusionsvermögen der Kupferkomponente dieser Holzschutzmittel in feuchtem Holz ist nicht ausreichend für eine Anwendung im Nachschutz.

Die nachveröffentlichte WO-A-96/23636 beschreibt Holzschutzmittel in Pastenform, die eine fungizide Metallverbindung und eine fungizide Borverbindung enthalten. Die Metallverbindungen umfassen auch Kupfer, komplexiert mit Aminocarbonsäuren oder Polycarbonsäuren.

Die nachveröffentlichte WO-A-96/23635 beschreibt ein Holzschutzmittel, das ein Metallchelat enthält. Beschrieben werden Kupferkomplexe mit Aminosäuren, Iminodiessigsäure, Ethylendiaminotetraessigsäure, Dicarbonsäuren und Polyphosphaten.

Aufgabe der vorliegenden Erfindung war es, ein Holzschutzmittel für den Nachschutz von Holz zur Verfügung zu stellen, das ein gutes Diffusionsvermögen des Kupfers im Holz aufweist, bei gleichzeitigem guten Schutz gegen Moderfäulnis und Basidiomyceten.

Weitere Aufgabe der vorliegenden Erfindung war es, eine Bandage, die dieses Holzschutzmittel enthält, für den Nachschutz von Holz zur Verfügung zu stellen.

Demgemäß wurde ein Holzschutzmittel gefunden auf Basis einer Kupferverbindung, eines Polyamins und eines anorganischen Fungizids, gegebenenfalls einer komplexbildenden organischen Carbonsäure oder deren Ammonium- oder Alkalisalze, gegebenenfalls weiterer Hilfsmittel und gegebenenfalls Wasser für den Nachschutz von Holz.

Diese Holzschutzmittel eignen sich besonders für den Nachschutz und die Nachpflege von Holz und werden angewendet als Bandagen, im Impfstichverfahren, Bohrlochverfahren und Pastenverfahren. Sie durchdringen das Splintholz bei Anwesenheit von Feuchtigkeit, z.B. Erdkontakt, und weisen eine gute Tiefenwirkung auf.

Als Kupferverbindungen können wasserlösliche oder -unlösliche Verbindungen, z.B. Kupfersulfat, Kupferacetat, Kupfercitrat, Kupfernaphthenat, Kupferhydroxid, Kupferhydroxycarbonat, Kupferoxychlorid, Kupferoxid, Kupferborat, Kupferfluorid, Kupferfluoroborat, oder deren Gemische verwendet werden.

Bevorzugt sind Kupferhydroxycarbonat, Kupferhydroxid sowie deren Gemische.

Besonders bevorzugt wird Kupferhydroxid, speziell stabilisiertes Kupferhydroxyd (Norddeutsche Affinerie) verwendet.

Die Wirkung des Holzschutzmittels kann durch Salze des N-Cyclohexyldiazeniumdioxids und anderer Diazeniumdioxide, z.B. als Kaliumsalz, verbessert werden, wobei sich mit Kupferverbindungen in der Regel das Bis(N-Cyclohexyldiazeniumdioxy)-Kupfer bildet.

Die Mischungen enthalten 0,25 bis 20 Gew.-% Kupfer berechnet als Element. Ein Teil des Kupfers kann z.B. auch durch eine entsprechende Zinkverbindung ersetzt werden.

Als Polyamine können verwendet werden, Alkylenamine mit 3-9 C-Atomen und 2-4 N-Atomen wie z.B. Ethylendiamin, 2-Diethylaminoethylamin, Diethylentriamin, Triethylentetramin, Tetraethylenpentamin, 1,2-Diaminopropan, 1,3-Diaminopropan, Dipropylentriamin, Tripropylentetramin, 3-(2-Aminoethyl)aminopropylamin, N,N'-Bis(3-aminopropyl)-1,3-propandiamin und Alkanolamine wie z.B. Aminoethylethanolamin sowie deren Gemische.

Bevorzugt sind Etyhlendiamin, Diethylentriamin, 1,3-Diaminopropan, Dipropylentriamin, Aminoethylethanolamin und deren Gemische.

Geeignete anorganische Fungizide sind Borverbindungen wie Alkaliborate, Aminoborate, Borsäure, Borsäureester und B₂O₃; Fluoride wie Alkalifluoride, Alkalibifluoride, Siliciumfluoride, Ammoniumfluoride, Ammoniumhydrogenfluoride; Fluoroborate; Fluorophosphate; Difluorophosphate und deren Gemische.

Bevorzugt sind Natriumfluoroborat, Kaliumfluoroborat, Borsäure, Natriumfluorid und deren Gemische.

Weiterhin können in den Holzschutzmitteln komplexbildende organische Carbonsäuren wie Hydroxycarbonsäuren, Aminocarbbnsäuren, stickstoffhaltige Polycarbonsäuren, deren Ammonium- oder Alkalisalze und deren Gemische mitverwendet werden.

Als geeignete Hydroxycarbonsäuren können z.B. Glykolsäure, Milchsäure, Weinsäure, Zitronensäure, Apfelsäure, deren Ammonium- oder Alkalisalze und deren Gemische mitverwendet werden.

Auch Aminosäuren wie z.B. Glycin, Sarkosin, deren Ammonium- oder Alkalisalze und deren Gemische können mitverwendet werden.

Als geeignete stickstoffhaltige komplexbildende Polycarbonsäuren können z.B. Nitrilotriessigsäure (NTA), Ethylendiamintetraessigsäure (EDTA), Diethylentriaminpentaessigsäure (DPTA), Propylendiamintetraessigsäure (PDTA), Hydroxyethylethylendiamintriessigsäure (HEDTA), β-Alanindiessigsäure, deren Ammonium- oder Alkalisalze und deren Gemische mitverwendet werden.

Die Holzchutzmittel der vorliegenden Erfindung können noch weitere Hilfsmittel wie Wasser, Bindemittel, Pastenbildner, organische und anorganische Basen, aliphatische Carbonsäuren, deren Ammonium- oder Alkalisalze, Weichmacher, Füllstoffe, Netzmittel, Verdickungsmittel und deren Gemische enthalten.

Die Holzschutzmittel können zusätzlich Wasser, das der Einstellung der Viskosität und der Handhabung dient, enthalten.

Als Bindemittel und Pastenbildner können verwendet werden z.B. Acrylatharze in Form von wäßrigen Dispersionen oder Pulvern; Plastisole, Aminoplaste, Phenoplaste, PVC mit Weichmachern und deren Gemische.

Als organische und anorganische Basen können Ammoniak, Alkalilauge, Amine oder deren Gemische mitverwendet werden. Geeignete Amine sind beispielsweise Mono-, Di- und Trialkylamine sowie Alkanolamine.

Geeignete Alkanolamine sind z.B. Monoethanolamin, Diethanolamin, Triethanolamin, Isopropanolamin.

Zur Verbesserung der Flexibilität des auf ein Trägermaterial aufgetrockneten Holzschutzmittels können zusätzlich aliphatische C₅-C₂₀-Carbonsäuren wie Hexansäure, Heptansäure, Octansäure, Nonansäure, Decansäure, 2-Ethylenpentansäure, 2-Ethylhexansäure, 2-Ethylheptansäure, Isooctansäure, Isononansäure, Isodecansäure, Versaticsäuren (stark verzweigte Monocarbonsäuren), Dicarbonsäuren (C₅-C₂₀) z.B. Decandicarbonsäure, Sebacinsäure verwendet werden. Geeignet sind auch Polycarbonsäuren wie Polyacrylsäuren bzw. Copolymere der Acrylsäure mit z.B. Maleinsäure und Naphtensäuren.

Geeignete Holzschutzmittel enthalten beispielsweise
- 2-50 Gew.-%,: bevorzugt 5-40 Gew.-% einer Kupferverbindung,
- 2-60 Gew.-%,: bevorzugt 5-50 Gew.-% eines Polyamins,
- 1-65 Gew.-%,: bevorzugt 2-55 Gew.-% eines anorganischen Fungizids,
- 0-25 Gew.-%,: bevorzugt 1-20 Gew.-% eines Alkalisalzes des N-Cyclohexyldiazeniumdioxids,
- 0-35 Gew.-%,: bevorzugt 1-30 Gew.-% einer komplexbildenden organischen Carbonsäure, deren Ammonium- oder Alkalisalze,
- 0-45 Gew.-%,: bevorzugt 1-20 Gew.-% eines Hilfsmittels,
- 0-50 Gew.-%,: bevorzugt 1-40 Gew.-% Wasser,
wobei die Summe aller Komponenten 100 Gew.-% ergibt.

Werden zu der Dreierkombination Kupferverbindung, Polyamin und anorganisches Fungizid weitere Komponenten mitverwendet, so haben sich folgende Holzschutzmittel bewährt:

Zusammensetzung bestehend aus
a)
   - 5-40 Gew.-%: einer Kupferverbindung
   - 5-35 Gew.-%: eines Polyamins
   - 10-50 Gew.-%: eines anorganischen Fungizids
   - 5-25 Gew.-%: einer komplexbildenden organischen Carbonsäure
   - 2,5-35 Gew.-%: Wasser;
   oder
b)
   - 5-40 Gew.-%: einer Kupferverbindung
   - 5-35 Gew.-%: eines Polyamins
   - 10-50 Gew.-%: eines anorganischen Fungizids
   - 5-25 Gew.-%: einer komplexbildenden organischen Carbonsäure
   - 2,5-20 Gew.-%: einer aliphatischen C₅-C₂₀-Carbons- bzw. Dicarbonsäure
   - 2,5-35 Gew.-%: Wasser;
   oder speziell bei Einsatz von Bindemittel und Pastenbildnern
c)
   - 5-40 Gew. -%: einer Kupferverbindung
   - 5-35 Gew.-%: eines Polyamins
   - 5-50 Gew.-%: eines anorganischen Fungizids
   - 0-5 Gew.-%: eines Alkalisalzes des N-Cyclohexyldiazeniumdioxids
   - 0-20 Gew.-%: einer komplexbildenden organischen Carbonsäure
   - 5-40 Gew.-%: eines Hilfsmittels
   - 0-30 Gew.-%: Wasser.

Die Herstellung der Holzschutzmittel, die als Konzentrate oder verdünnt mit Wasser als viskose Lösungen oder in Form von Pasten, gegebenenfalls auch als Festsalz vorliegen können, erfolgt am besten, indem ein Polyamin und gegebenenfalls komplexbildende organische Carbonsäuren bzw. deren Ammonium- oder Alkalisalze und gegebenenfalls Hilfsmittel, speziell aliphatische C₅-C₂₀-Carbonbzw. Dicarbonsäuren, mit Wasser vorgelöst werden. Die Kupferverbindungen werden anschließend darin gelöst. Auf den Gebrauch von Wasser kann verzichtet werden, wenn die eingesetzten Stoffe ausreichend Wasser (z.B. Kristallwasser) enthalten. Festsalze, gebildet aus Kupferverbindungen, Polyamin und gegebenenfalls komplexbildenden organischen Carbonsäuren bzw. deren Ammoniumoder Alkalisalzen, können ebenfalls verwendet werden.

Diese Vormischung kann bereits als hochkonzentrierte Paste vorliegen, der dann die anorganischen Fungizide, sowie gegebenenfalls weitere Hilfsmittel, unter Rühren zugesetzt werden.

Der pH-Wert des Holzschutzmittels in Form der Konzentrate oder Pasten liegt im allgemeinen zwischen pH 7-12. Die Konzentrate oder Pasten können je nach Anwendung einerseits direkt oder unter Bindemittelzusatz auf oder in ein geeignetes Trägermaterial aufoder eingebracht werden. Geeignete Trägermaterialien sind z.B. Kunststoffolien oder Vliese z.B. aus Glasfaser, Polypropylen, Polyester-, Viskosefaser, Schaumstoff oder anderen porösen Kunststoffmassen. Hierbei werden die Konzentrate z.B. durch Walzen (Kalandrieren) auf das Trägermaterial aufgebracht. Als Bindemittel können verwendet werden z.B. Acrylatharze in Form von wäßrigen Dispersionen, Pulvern; Plastisole, Aminoplaste, Phenoplaste, PVC mit Weichmachern.

Das System Konzentrat/Trägermaterial wird meist anschließend einer Trocknung z,B. Lufttrocknung oder z.B. in einem Ofen bei Temperaturen von ca. 100-180°C, unterworfen, wobei das Konzentrat hochviskos auftrocknet und an das Trägermaterial gebunden wird; diese Bindung kann gegebenenfalls durch o.g. Bindemittelzusatz verbessert werden, gleichzeitig kann hierdurch, wenn notwendig, die Holzschutzmittelabgabe bei hoher Bindemitteldosierung nach Anwendung verzögert werden.

Die Konzentrate, insbesondere bei Zusatz von Bindemittel, können auch in Form von Strängen gepreßt, getrocknet und auf Länge geschnitten werden, um Salzpatronen für die Einlagerung in Holz über Bohrlöcher zu erhalten, z.B. beim Bohrlochverfahren. Es ist auch möglich, Patronen aus pulverförmigen Mischungen z.B. bei der Verwendung sprühgetrockneter Konzentrate oder der Verwendung pulverförmiger Rohstoffe in Form von Salzpreßlingen zu fertigen.

Die diffusionsfähigen Pasten und Konzentrate bzw. Patronen können in den verschiedenen Verfahren des Nachschutzes und der Nachpflege angewendet werden, wenn bei besonders gefährdeten Holzbauteilen in bestimmten Bereichen größere Schut zmitteleinbringmengen und Eindringtiefen erreicht werden sollen.

Die Pasten eignen sich für das Bandagenverfahren, wie Einfach-Bandagen oder Mehrfach-Bandagen, das Impfstichverfahren, Bohrlochverfahren und das Pastenverfahren.

Die Anwendung erfolgt in Form vorbeugender oder auch bekämpfender Schutzbehandlungen, um
a) im übrigen nicht mit Holzschutzmitteln behandelte Hölzer nur in bestimmten Abschnitten dauerhaft zu schützen, z.B. Deckenbalkenköpfe;
b) in den Gefahrenbereichen die bei der Erstbehandlung erreichten Einbringmengen oder Eindringtiefen zu erhöhen;
c) in bereits verbautem Holz nach längerer Standdauer (Gebrauchsdauer) den Schutzmittelgehalt aus dem Grundschutz zu erganzen bzw. anzuheben;
d) bei verbauten Holzteilen auch jene Bereiche zu erreichen, insbesondere im Verlauf einer Bekämpfungsmaßnahme, die mit üblichen Tränkverfahren nicht zu erfassen sind.

5 Die Erfindung wird anhand folgender Beispiele beschrieben:

Für die Versuche wurden die Pasten/Konzentrate in definierten Mengen auf Schaumstoff als Träger aufgebracht. Der Schaumstoff mit der Paste durchlief dann einen Trocknungsprozeß. Die erhaltene Bandage wurde nach der Herstellung an erdverbauten Rundhölzern aus Kiefernholz in der Erd-Luftzone angelegt. Dieser Bereich wurde anschließend mit einer selbstklebenden PVC-Folie umwickelt und damit gegen das Eindringen von Wasser von außen geschützt.

Nach einer Standdauer von 12 Monaten wurden die Rundhölzer ausgegraben, im Bereich der Erd-Luftzone mehrfach senkrecht zur Maserung aufgeschnitten, die Rundholzschalen entnommen und die Kupfereindringung durch Reagenzieren (Besprühen) mit einer 0,2 %igen wäßrigen Lösung von 4-(Pyridyl-(2)-azo)-resorcin Mononatriumsalz (Kupferreagenz) bestimmt.

Für die Versuche wurden Kieferrundhölzer mit einem Durchmesser von mindestens 20 cm und Splintholzbreiten von ≥ 3 cm verwendet. Es wurde jeweils eine Menge von ca. 500 g Konzentrat/Salzmischung pro Bandage aufgebracht, das Trägermaterial mit dem Wirkstoffkonzentrat wurde so eingebaut, daß es sich ca. 10 cm über der Erdgleiche und ca. 30 cm unter der Erdgleiche befand; die Abdeckfolie überlappte diesen Bereich um jeweils mindestens 10 cm. Die Bandagenabmessung betrug hierbei 40 cm x 80 cm. Pro Formulierung wurden mindestens 2 Bandagen an verschiedenen Rundhölzern angelegt und auf das Eindringvermögen geprüft.

### Beispiel A (nicht erfindungsgemäß)

- 35 Gew.-%: Kupfersulfat
- 32 Gew.-%: Kaliumbichromat
- 30 Gew.-%: Borsäure
- 3 Gew.-%: Natriumhydrogensulfat

Das Salz wurde gemahlen, mit Wasser, Acrylatdispersion (50 %ige wäßrige Dispersion eines Copolymers aus n-Butylacrylat und Styrol) als Bindemittel angepastet (10 T Konzentrat/2 T Wasser/3 T Bindemittel), auf den Schaumstoff als Träger aufgebracht und bei 120°C mindestens 15 min. im Durchlauf getrocknet.

Die erhaltenen Bandagen wurden an Rundhölzer angelegt. Die Hölzer wurden nach 12 Monaten Standdauer ausgebaut, nach Aufschneiden wurde die mittlere Kupfereindringung ermittelt.

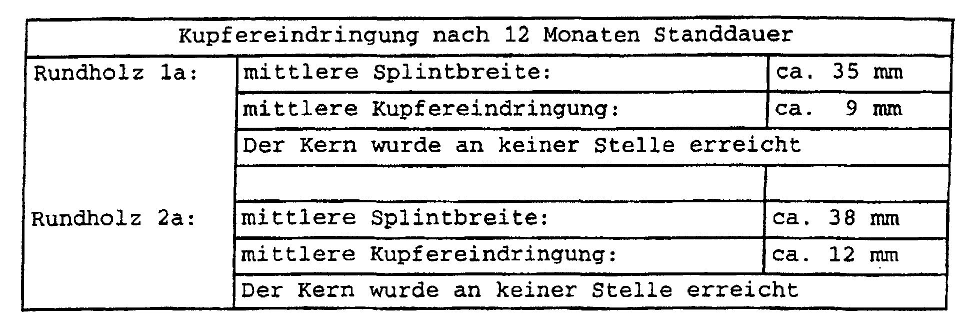

### Beispiel B (nicht erfindungsgemäß)

50 Gew.-% Kupfersulfat
45 Gew.-% Borsäure
5 Gew.-% Natriumhydrogensulfat

Das Salz wurde nach Mahlen mit Wasser, Acrylatdispersion (50 %ige wäßrige Dispersion eines Copolymers aus n-Butylacrylat und Styrol) als Bindemittel angepastet (10 T Konzentrat/2 T Wasser/3 T Bindemittel), auf den Schaumstoff aufgebracht und bei Raumtemperatur mindestens 24 h getrocknet. Die Bandagen wurden angelegt.

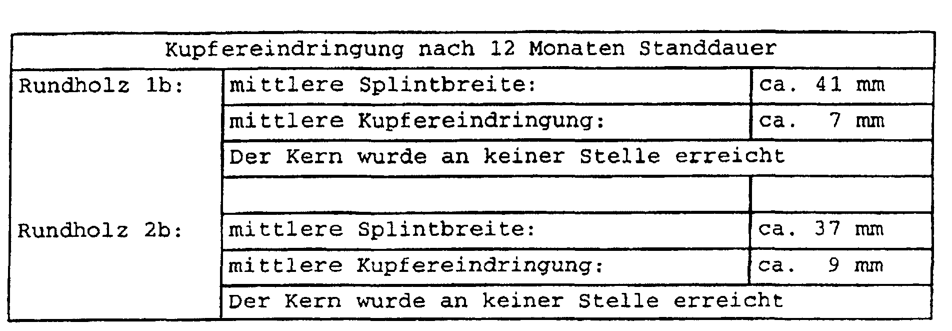

### Beispiel C (nicht erfindungsgemäß)

50 Gew.-% Kupfersulfat
50 Gew,-% Natriumfluoroborat

Das Salz wird nach Mahlen mit Wasser, Acrylatdispersion (50 %ige wäßrige Dispersion eines Copolymers aus n-Butylacrylat und Styrol) als Bindemittel angepastet (10 T Konzentrat(2 T Was ser/3 T Bindemittel), auf den Schaumstoff aufgebracht und bei Raumtemperatur mindestens 24 h getrocknet. Die Bandage wurde angelegt.

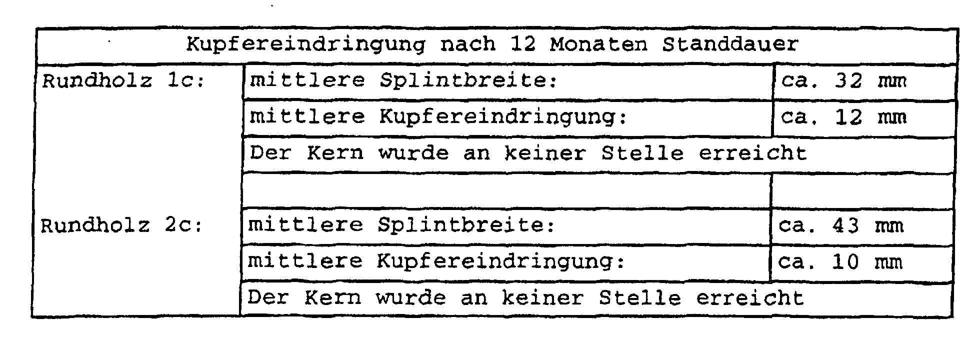

### Beispiel D (nicht erfindungsgemäß)

35 Gew.-% Kupferacetat
65 Gew.-% Kaliumfluoroborat

Das Salz wurde nach Mahlen mit Wasser, Acrylatdispersion (50 %ige wäßrige Dispersion eines Copolymers aus n-Butylacrylat und Styrol) als Bindemittel angepastet (10 T Konzentrat(2 T Wasser/3 T Bindemittel) auf den Schaumstoff aufgebracht und bei Raumtemperatur mindestens 24 h getrocknet. Die Bandage wurde angelegt.

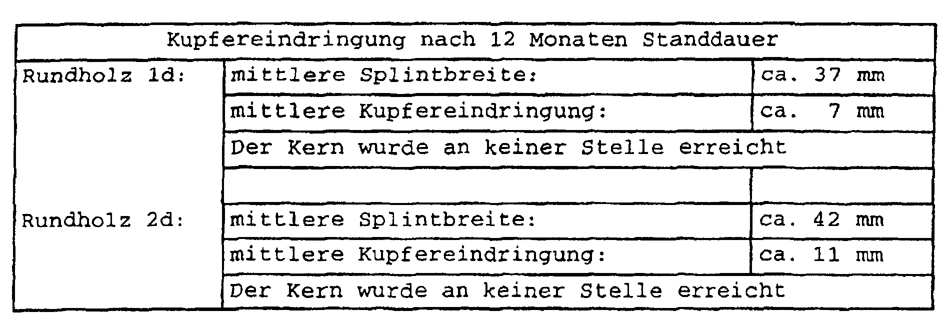

### Erfindungsgemäße Beispiele

### Beispiel I

10 Gew.-% Ethanolamin
10 Gew.-% Ethylendiamin
20 Gew.-% Wasser
10 Gew.-% Kupferhydroxycarbonat
50 Gew.-% Borsäure

Das Konzentrat wurde durch Rühren hergestellt und auf Schaumstoff aufgebracht und bei Raumtemperatur mindestens 24 h getrocknet. Die Bandage wurde angelegt.

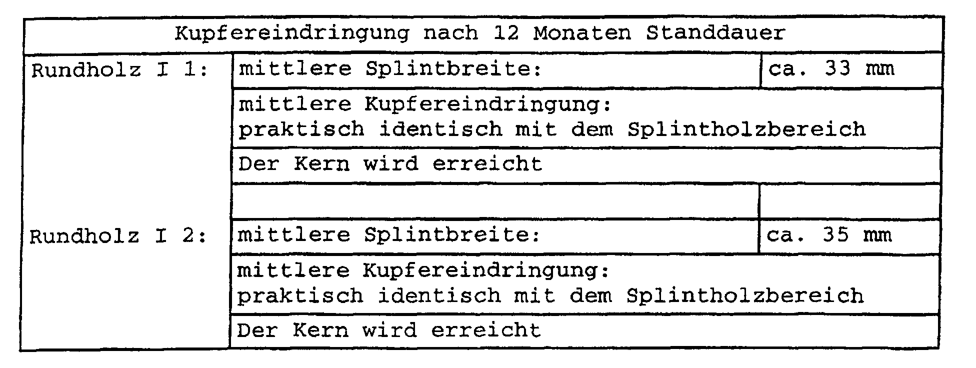

### Beispiel II

25,00 Gew.-% Aminoethylethanolamin
16,65 Gew.-% Wasser
8,35 Gew.-% Kupferhydroxycarbonat
50,00 Gew.-% Borsäure

Das Konzentrat wurde durch Rühren hergestellt, auf Schaumstoff aufgebracht und bei Raumtemperatur mindestens 24 h getrocknet. Die Bandage wurde angelegt.

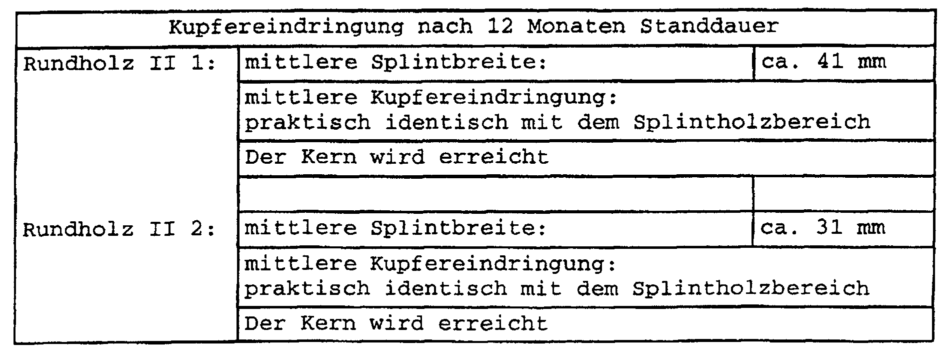

### Beispiel III

32,50 Gew.-% Aminoethylethanolamin
10,00 Gew.-% Milchsäure
17,00 Gew.-% Wasser
25,00 Gew.-% Borsäure
15,50 Gew.-% Cu(OH)₂, handelsüblich, stabilisiert (Hersteller: Norddeutsche Affinerie)

Das Konzentrat wurde durch Rühren hergestellt und auf Schaumstoff aufgebracht und bei Raumtemperatur mindestens 24 h getrocknet. Die Bandage wurde angelegt.

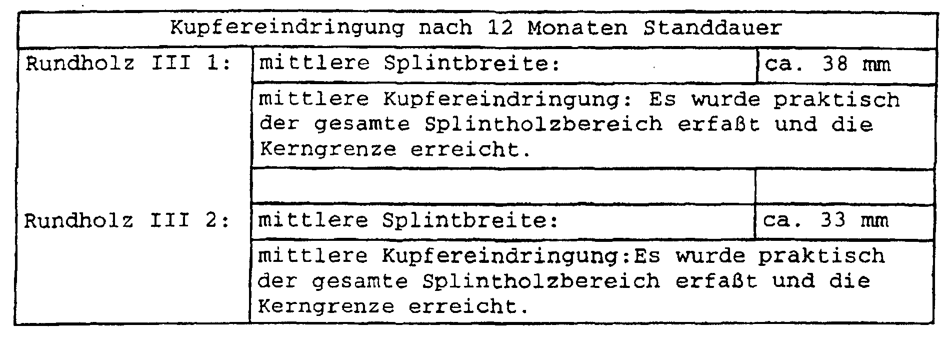

### Beispiel IV

7,70 Gew.-% Dipropylentriamin
9,80 Gew.-% Wasser
2,50 Gew.-% Isooctansäure
2,50 Gew.-% Äpfelsäure
1,00 Gew.-% N-Cyclohexyldiazeniumdioxy-Kalium
5,50 Gew.-% Kupferhydroxid, handelsüblich, stabilisiert (Hersteller: Norddeutsche Affinerie)
38,00 Gew.-% Natriumfluorid
33,00 Gew.-% Polyvinylchlorid-Pulver (Vinnolit P 4472 der Fa. Vinnolit)/Bis(2-ethylhexyl)-phthalat-Vormischung (Mischungsverhältnis: ca. 4:5)

Eine Paste wurde durch Rühren hergestellt, auf Schaumstoff aufgebracht und bei 130°C mindestens 15 min. im Durchlaufofen getrocknet. Die Bandage wurde angelegt.

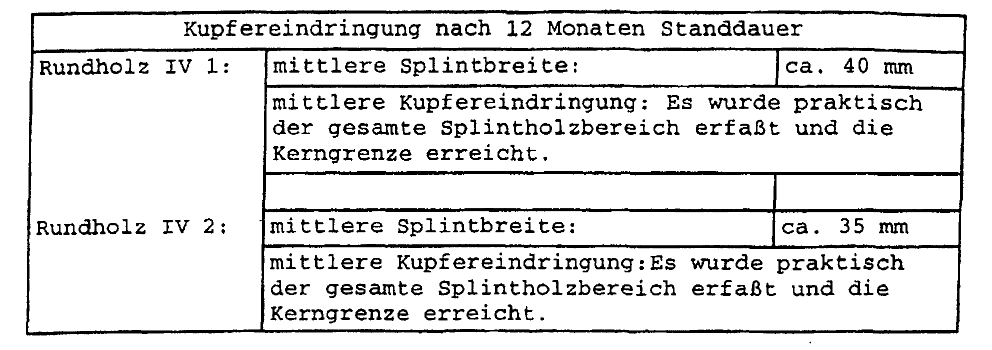

Die folgenden Beispiele ergeben ein entsprechend gutes Diffusionsvermögen.

### Beispiel V

14,2 Gew.-% Dipropylentriamin
8,9 Gew.-% Äpfelsäure
18,9 Gew.-% Kupferhydroxidcarbonat [Cu(OH)2CuCO3]
10,0 Gew.-% Wasser
35,0 Gew.-% Natriumfluorid
13,0 Gew.-% Borsäure

Abweichend zu den zuvor aufgeführten Anwendungen wurde dieses Mal 500 g der gleichartig hergestellten Paste direkt auf das Rundholz aufgetragen und mit einer Kunststoffolie abgedeckt. Die Einbaubedingungen waren identisch mit den zuvor beschriebenen.

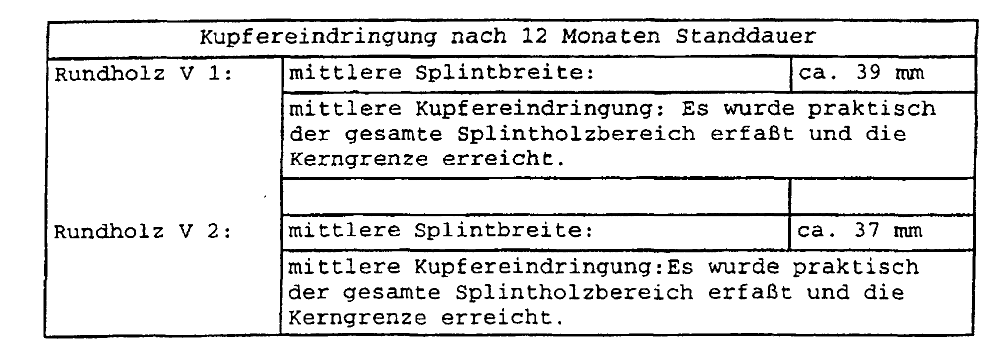

### Beispiel VI

- 22,50 Gew.-%: 1,3-Diaminopropan
- 24,00 Gew.-%: Wasser
- 10,00 Gew.-%: Äpfelsäure
- 3,50 Gew,-%: N-Cyclohexyldiazeniumdioxy-Kalium
- 15,00 Gew.-%: Kuprerhydroxid, handelsüblich, stabilisiert (Hersteller: Norddeutsche Affinerie)
- 25,00 Gew.-%: Borsäure

Eine Paste wurde durch Rühren hergestellt, auf Schaumstoff aufgebracht und im Durchlaufofen bei 140°C getrocknet.

Eine Paste wurde durch Rühren hergestellt, auf Schaumstoff aufgebracht und im Durchlauf ofen bei 140°C getrocknet.

### Beispiel VII

22,50 Gew.-% 1,3-Diaminopropan
21,00 Gew.-% Wasser
7,50 Gew.-% Nitrilotriessigsäure
4,00 Gew.-% N-Cyclohexyldiazeniumdioxy-Kalium
5,00 Gew.-% Glyzerin
25,00 Gew.-% Borsäure
15,00 Gew.-% Kupferhydroxid, handeslüblich, stabilisiert (Hersteller: Norddeutsche Affinerie)

Eine Paste wurde durch Rühren hergestellt, auf Schaumstoff aufgebracht und mindestens 15 min im Durchlaufofen bei 130°C getrocknet.

### Beispiel VIII

Bsp. VIII streichen, der Verwendung dieses Cu⁻ Salzes nicht mehr beansprucht.

### Beispiel VIII

16,70 Gew.-% Dipropylentriamin
11,80 Gew.-% Wasser
8,00 Gew.-% Isooctansäure
5,00 Gew.-% Äpfelsäure
16,60 Gew.-% Borsäure
8,60 Gew.-% Kupferhydroxid, handelsüblich, stabilisiert (Hersteller: Norddeutsche Affine rie)
33,30 Gew.-% Polyvinylchlorid-Pulver (Vinnolit P 4472 der Fa. Vinnolit)/Bis(2-ethylhexyl)-phthalat-Vormischung (Mischungsverhältnis: ca. 4:5)

Eine Paste wurde durch Rühren hergestellt, auf Schaumstoff aufgebracht und mindestens 15 min bei 130°C im Durchlaufofen getrocknet.

### Beispiel IX

18,5 Gew.-% Dipropylentriamin
5,3 Gew.-% Wasser
7,7 Gew.-% Isooctansäure
7,5 Gew.-% Äpfelsäure
11,5 Gew.-% Kupferhydroxid stabilisiert
36,5 Gew.-% Natriumfluorid
13,0 Gew.-% Borsäure

Eine Paste wurde durch Rühren hergestellt, auf Schaumstoff aufgebracht und mindestens 15 min bei 130°C im Durchlaufofen getrocknet.

### Beispiel X

15,4 Gew.-% Dipropylentriamin
23,9 Gew.-% Wasser
35,7 Gew.-% Kupfercitrat (ca. 35 % Cu)
   (Kupfer II-citrat-2,5-hydrat)
25,0 Gew.-% Borsäure

Eine Paste wurde durch Rühren hergestellt, auf Schaumstoff aufgebracht und mindestens 15 min bei 130°C im Durchlaufofen getrocknet.

### Beispiel XI

16.5 Gew.-% Diethylentriamin
27,5 Gew.-% Wasser
15,0 Gew.-% Äpfelsäure
16,0 Gew.-% Kupferhydroxid stabilisiert
25,0 Gew.-% Borsäure

Eine Paste wurde durch Rühren hergestellt, auf Schaumstoff aufgebracht und mindestens 15 min bei 130°C im Durchlaufofen getrocknet.

### Beispiel XII

21,0 Gew.-% Dipropylentriamin
28,0 Gew.-% Wasser
13,2 Gew.-% Zitronensäure Monohydrat
16,8 Gew.-% Kupferhydroxid (stabilisiert)
21,0 Gew.-% Polybor (Na₂B₈O₁₃ x 4 H₂O)

Eine Paste wurde durch Rühren hergestellt, auf Schaumstoff aufgebracht und mindestens 15 min bei 130°C im Durchlaufofen getrocknet.

### Beispiel XIII

19,0 Gew.-% Dipropylentriamin
11,9 Gew.-% Äpfelsäure
16,9 Gew.-% Kupferhydroxidcarbonat
32,2 Gew.-% Wasser
20,0 Gew.-% Natriumfluorid

Eine Paste wurde durch Rühren hergestellt, auf Schaumstoff aufgebracht und mindestens 15 min bei 130°C im Durchlaufofen getrocknet.

## Patentansprüche

1. Verwendung eines Holzschutzmittels für den Nachschutz von Holz in einem Verfahren ausgewählt aus Bandagen verfahren, Impfstichverfahren, Bohrlochverfahren und Pastenverfahren, enthaltend eine Kupferverbindung, ein Polyamin und ein anorganisches Fungizid.

2. Verwendung eines Holzschutzmittels nach Anspruch 1, weiterhin enthaltend eine komplexbildende organische Carbonsäure.

3. Verwendung eines Holzschutzmittels nach einem der Ansprüche 1 bis 2, enthaltend eine Kupferverbindung, ausgewählt aus der Gruppe Kupfersulfat, Kupferacetat, Kupfercitrat, Kupfernaphthenat, Kupferhydroxid, Kupferhydroxycarbonat, Kupferoxychlorid, Kupferoxid, Kupferborat, Kupferfluorid, Kupferfluoroborat, oder deren Gemische.

4. Verwendung eines Holzschutzmittels nach einem der Ansprüche 1 bis 3, enthaltend ein Polyamin, ausgewählt aus der Gruppe C₂-C₉-Alkylenpolyamin, Alkanolamin oder deren Gemische.

5. Verwendung eines Holzschutzmittels nach Anspruch 4, enthaltend ein Polyamin, ausgewählt aus der Gruppe Ethylendiamin, 2-Diethylaminoethylamin, Diethylentriamin, Triethylentetramin, Tetraethylenpentamin, 1,2-Diaminopropan, 1,3-Diaminopropan, Dipropylentriamin, Tripropylentetramin, 3-(2-Aminoethyl)aminopropylamin, N,N'-Bis(3-aminopropyl)-1,3-propandiamin, Aminoethylethanolamin und deren Gemische.

6. Verwendung eines Holzschutzmittels nach Anspruch 5, enthaltend ein Polyamin, ausgewählt aus der Gruppe Ethylendiamin, Diethylentriamin, 1,3-Diaminopropan, Dipropylentriamin, Aminoethylethanolamin und deren Gemische.

7. Verwendung eines Holzschutzmittels nach einem der Ansprüche 1 bis 6, enthaltend ein anorganisches Fungizid, ausgewählt aus der Gruppe der Borverbindungen, Fluoride, Fluoroborate, Fluorophosphate, Difluorophosphate und deren Gemische.

8. Verwendung eines Holzschutzmittels nach einem der Ansprüche 2 bis 7, enthaltend eine komplexbildende organische Carbonsäure, ausgewählt aus der Gruppe Hydroxycarbonsäuren, Aminocarbonsäuren, stickstoffhaltige Polycarbonsäuren, deren Ammonium- und Alkalisalze und deren Gemische.

9. Verwendung eines Holzschutzmittels nach Anspruch 8, enthaltend eine komplexbildende organische Carbonsäure, ausgewählt aus der Gruppe Glykolsäure, Milchsäure, Äpfelsäure, Weinsäure, Citronensäure, Nitrilotriessigsäure, Ethylendiamintetraessigsäure, Diethylentriaminpentaessigsäure, Propylendiamintetraessigsäure, Hydroxyethylethylendiamintriessigsäure, β-Alanindiessigsäure, Sarkosin, Glycin deren Ammoniumund Alkalisalze und deren Gemische.

10. Verwendung eines Holzschutzmittels nach einem der Ansprüche 1 bis 9, weiterhin enthaltend Hilfsmittel aus der Gruppe Wasser, Bindemittel, Pastenbildner, organische und anorganische Basen, aliphatische Carbonsäuren, Weichmacher, Füllstoffe, Netzmittel, Verdickungsmittel und deren Gemische.

11. Verwendung eines Holzschutzmittels nach einem der Ansprüche 1 bis 10, enthaltend
2 bis 50 Gew.-% einer Kupferverbindung,
2 bis 60 Gew.-% eines Polyamins,
1 bis 65 Gew.-% eines anorganischen Fungizides,
0 bis 25 Gew.-% eines Alkali-Salzes des N-Cyclohexyldiazeniumdioxids,
0 bis 35 Gew.-% einer komplexbildenden organischen Carbonsäure oder deren Ammonium- oder Alkalisalze,
0 bis 25 Gew.-% Hilfsmittel, und
0 bis 50 Gew.-% Wasser,
wobei die Summe aller Komponenten jeweils 100 Gew.-% ergibt.

12. Bandage für den Nachschutz von Holz, enthaltend ein Holzschutzmittel gemäß einem der Ansprüche 1 bis 11.

## Claims

1. The use of a wood preservative for the afterprotection of wood in a process selected from amongst the bandage process, the inoculation injection process, the borehole process and the paste process, comprising a copper compound, a polyamine and an inorganic fungicide.

2. The use of a wood preservative as claimed in claim 1, furthermore comprising a complex-forming organic carboxylic acid.

3. The use of a wood preservative as claimed in either of claims 1 or 2, comprising a copper compound selected from the group consisting of copper sulfate, copper acetate, copper citrate, copper naphthenate, copper hydroxide, copper hydroxycarbonate, copper oxychloride, copper oxide, copper borate, copper fluoride, copper fluoroborate and mixtures thereof.

4. The use of a wood preservative as claimed in one of claims 1 to 3, comprising a polyamine selected from the group consisting of C₂-C₉ alkylenepolyamine, alkanolamine and mixtures thereof.

5. The use of a wood preservative as claimed in claim 4, comprising a polyamine selected from the group consisting of ethylenediamine, 2-diethylaminoethylamine, diethylenetriamine, triethylenetetramine, tetraethylenepentamine, 1,2-diaminopropane, 1,3-diaminopropane, dipropylenetriamine, tripropylenetetramine, 3-(2-aminoethyl)aminopropylamine, N,N'-bis(3-aminopropyl)-1,3-propanediamine, aminoethylethanolamine and mixtures thereof.

6. The use of a wood preservative as claimed in claim 5, comprising a polyamine selected from the group consisting of ethylenediamine, diethylenetriamine, 1,3-diaminopropane, dipropylenetriamine, aminoethylethanolamine and mixtures thereof.

7. The use of a wood preservative as claimed in one of claims 1 to 6, comprising an inorganic fungicide selected from the group consisting of the boron compounds, fluorides, fluoroborates, fluorophosphates, difluorophosphates and mixtures thereof.

8. The use of a wood preservative as claimed in one of claims 2 to 7, comprising a complex-forming organic carboxylic acid, selected from the group consisting of hydroxycarboxylic acids, aminocarboxylic acids, nitrogen-containing polycarboxylic acids, ammonium and alkali metal salts thereof and mixtures thereof.

9. The use of a wood preservative as claimed in claim 8, comprising a complex-forming organic carboxylic acid selected from the group consisting of glycolic acid, lactic acid, malic acid, tartaric acid, citric acid, nitriloacetic acid, ethyl-enediaminetetraacetic acid, diethylenetriaminepentaacetic acid, propylenediaminetetraacetic acid, hydroxyethylethylenediaminetriacetic acid, β-alaninediacetic acid, sarcosine, glycine, ammonium and alkali metal salts thereof and mixtures thereof.

10. The use of a wood preservative as claimed in one of claims 1 to 9, furthermore comprising auxiliaries from the group consisting of water, binders, paste-forming agents, organic and inorganic bases, aliphatic carboxylic acids, plasticizers, fillers, wetting agents, thickeners and mixtures thereof.

11. The use of a wood preservative as claimed in one of claims 1 to 10, comprising
from 2 to 50 % by weight of a copper compound,
from 2 to 60 % by weight of a polyamine,
from 1 to 65 % by weight of an inorganic fungicide,
from 0 to 25 % by weight of an alkali metal salt of N-cyclohexyldiazenium dioxide,
from 0 to 35 % by weight of a complex-forming organic carboxylic acid or its ammonium or alkali metal salts,
from 0 to 25 % by weight of auxiliary, and
from 0 to 50 % by weight of water,
the sum of all components in each case yielding 100 % by weight.

12. A bandage for the afterprotection of wood, comprising a wood preservative as claimed in one of claims 1 to 11.

## Revendications

1. Utilisation d'un produit pour la protection du bois pour la protection complémentaire du bois dans un procédé choisi parmi le procédé par bandage, le procédé par vaccination, le procédé par perçage et le procédé par pâte, contenant un composé du cuivre, une polyamine et un fongicide inorganique.

2. Utilisation d'un produit pour la protection du bois selon la revendication 1, contenant en outre un acide organique carboxylique complexant.

3. Utilisation d'un produit pour la protection du bois selon l'une des revendications 1 à 2, contenant un composé du cuivre choisi dans le groupe consistant en le sulfate de cuivre, l'acétate de cuivre, le citrate de cuivre, le naphténate de cuivre, l'hydroxyde de cuivre, l'hydroxycarbonate de cuivre, l'oxychlorure de cuivre, l'oxyde de cuivre, le borate de cuivre, le fluorure de cuivre, le fluoroborate de cuivre ou leurs mélanges.

4. Utilisation d'un produit pour la protection du bois selon les revendications 1 à 3, contenant une polyamine choisie parmi les (alkylène en C₂-C₉)polyamines, les alconolamines et leurs mélanges.

5. Utilisation d'un produit pour la protection du bois selon la revendication 4, contenant une polyamine choisie parmi l'éthylène-diamine, la 2-diéthylaminoéthylamine, la diéthylènetriamine, la triéthylènetétramine, la tétraéthylènepentamine, le 1,2-diaminopropane, le 1,3-diaminopropane, la dipropylènetriamine, la tripropylènetétramine, la 3-(2-aminoéthyl)aminopropylamine, la N,N'-bis-3-aminopropyl)-1,3-propanediamine, l'aminoéthyléthanolamine et leurs mélanges.

6. Utilisation d'un produit pour la protection du bois selon la revendication 5, contenant une polyamine choisie parmi l'éthylènediamine, la diéthylènetriamine, le 1,3-diaminopropane, la dipropylènetriamine, l'aminoéthyléthanolamine et leurs mélanges.

7. Utilisation d'un produit pour la protection du bois selon l'une des revendications 1 à 6, contenant un fongicide inorganique choisi parmi les composés du bore, les fluorures, les fluoroborates, les fluorophosphates, les difluorophosphates et leurs mélanges.

8. Utilisation d'un produit pour la protection du bois selon l'une des revendications 2 à 7, contenant un acide carboxylique complexant choisi parmi les acides hydroxycarboxyliques, les acides aminocarboxyliques, les acides polycarboxyliques azotés, leurs sels d'ammonium et alcalins et leurs mélanges.

9. Utilisation d'un produit pour la protection du bois selon la revendication 8, contenant un acide organique carboxylique complexant choisi parmi l'acide glycolique, l'acide lactique, l'acide malique, l'acide tartrique, l'acide citrique, l'acide nitrilotriacétique, l'acide éthylènediaminetétracétique, l'acide diéthylènetriaminepentacétique, l'acide propylènediaminetétracétique, l'acide hydroxyéthyléthylènediaminetriacétique, l'acide bêta-alaninediacétique, la sarcosine, la glycine, leurs sels d'ammonium et alcalins et leurs mélanges.

10. Utilisation d'un produit pour la protection du bois selon l'une des revendications 1 à 9, contenant en outre des produits auxiliaires choisis parmi l'eau, les liants, les produits empâtants, les bases organiques et minérales, les acides carboxyliques aliphatiques, les plastifiants, les matières de charge, les agents mouillants, les agents épaississants et leurs mélanges.

11. Utilisation d'un produit pour la protection du bois selon l'une des revendications 1 à 10, contenant
2 à 50 % en poids d'un composé du cuivre,
2 à 60 % en poids d'une polyamine,
1 à 65 % en poids d'un fongicide inorganique,
0 à 25 % en poids d'un sel alcalin du dioxyde de N-cyclohexyldiazénium,
0 à 35 % en poids d'un acide organique carboxylique complexant ou ses sels d'ammonium ou alcalins,
0 à 25 % en poids de produits auxiliaires et
0 à 50 % en poids d'eau,
la somme de tous les composants représentant dans tous les cas 100 % en poids.

12. Bandage pour la protection complémentaire du bois, contenant un produit pour la protection du bois selon l'une des revendications 1 à 11.
